# EUROPEAN PATENT APPLICATION

(11) **EP 3 487 205 A1**
(43) Date of publication of application: **22.05.2019**
(21) Application number: 17201878.0
(22) Date of filing: 15.11.2017
(51) Int. Cl.: H04W 24/10, H04W 56/00

(54) **MEASUREMENT GAP CONFIGURATION FOR 5G**

(71) Applicant: FUJITSU LIMITED, Kanagawa 211-8588 (JP)
(72) Inventor: WEI, Xusheng, Staines, Surrey TW18 2QT (GB); BUCKNELL, Paul, East Sussex BN10 7AJ (GB)
(74) Representative: Haseltine Lake LLP

(57) **Abstract**

Measurement gaps are provided in wireless communication for allowing a terminal (10) to perform measurements. In LTE there are only two measurement gap configurations and these two configurations also have the same measurement gap length. The terminal will only have one measurement gap configuration which is linked to all measurement objects, which is inadequate for New Radio, NR. Therefore, methods are proposed by which a gNB (20) can provide the terminal with a measurement gap configuration with different measurement gap lengths for different objects. In addition, solutions which can dynamically update the measurement gap repetition period or measurement gap length during one measurement duration are provided. The measurement gap repetition period may be set in view of a SS burst set repetition period. These solutions will improve the accuracy of NR inter-frequency measurements and improve spectrum efficiency at the same time.

## Description

### Field of the Invention

The present invention relates to a wireless communication method in which terminals connect to cells in a wireless network. The present invention further relates to a base station, a terminal and a wireless communication system.

Particularly, but not exclusively, the present invention relates to techniques for designing a measurement gap configuration in a "5G" (also known as "NR" for New Radio) wireless communication system.

### Background of the Invention

Wireless communication systems are widely known in which terminals (also called user equipments or UEs, subscriber or mobile stations) communicate with base stations (BSs) within communication range of the terminals.

At a given carrier frequency the different geographical areas served by one or more base stations are generally referred to as cells. A base station may control one or more transmission (and/or reception) points and each transmission point may support one or more cells. Typically many transmission points are provided in appropriate locations so as to form a network covering a wide geographical area more or less seamlessly with adjacent and/or overlapping cells. (In this specification, the terms "system" and "network" are used synonymously). For each cell, a base station, which provides or at least manages the transmission point, divides the available bandwidth, i.e. frequency and time resources, into individual resource allocations for the user equipments served by the cell. In this way, a signal transmitted in a cell and scheduled by the base station has a specific location in the frequency and time domains. The terminals are generally mobile and therefore may move among the cells, prompting a need for handover of the connection of the terminal to the network as the terminal moves between adjacent cells. A terminal may be in range of (i.e. able to detect signals from and/or communicate with) several cells at the same time, but in the simplest case it communicates with one "serving" cell.

In current, "4G" systems, also known as LTE or LTE-A, a terminal has to perform cell search and synchronization in order to connect to a cell. For this purpose, each cell broadcasts synchronization signals referred to as the Primary Synchronization Signal (PSS) and Secondary Synchronization Signal (SSS). These signals establish a timing reference for the cell, and carry a physical layer cell identity and physical layer cell identity group for identifying the cell. These kinds of signals are referred to below as "synchronization signals".

In an LTE system, in the frequency domain, transmissions occur within at least one frequency band. Retuning of an RF circuit of the terminal is required as the terminal moves between cells belonging to different frequency layers.

In the time domain, transmission is organized in "frames" which are subdivided into "subframes". In one frame structure used in LTE, a 10 ms frame is divided into 10 subframes each of 1ms duration. PSS/SSS can indicate to a terminal the timings of frame boundaries, i.e. timings where frames stop and start. In LTE, each of the PSS and SSS is transmitted twice per frame, in other words with a 5ms periodicity (and consequently, only in some subframes). For example, PSS and SSS are both transmitted on the first and sixth subframe of every frame within the frame structure.

In LTE specifications, a terminal can be considered as either synchronised or unsynchronised with respect to a cell. Successfully decoding the PSS and SSS allows a terminal to obtain synchronization information, including downlink (DL) timing and cell ID for a cell; in other words the terminal (or at least some aspects of the operation of the terminal) can become "synchronized" with the timing of signals associated with the cell. In the synchronized state, the terminal can decode system information contained in a Physical Broadcast Channel (PBCH) broadcast by the cell. The terminal can then begin to receive user data (packets) on a downlink from the cell, and/or, typically after some further protocol steps, transmit user data on an uplink (UL) to the cell.

Terminals need to measure each communication channel between itself and a given cell in order to provide appropriate feedback to that cell. To facilitate measurements of the channel by terminals, reference signals are transmitted by the cells. Various kinds of reference signal (or symbol) are provided in LTE, including cell-specific reference signals (CRS) and channel state information reference signals (CSI-RS), both of which may be used by the UE to estimate the channel and report channel quality information (CQI) to the base station. References below to "reference signals" include both CRS and CSI-RS.

Nowadays mobile access to the Internet or other communications networks is becoming a crucial necessity for both business and personal life and there are significant challenges to the current wireless systems due to the popularity of new applications such as social networking, cloud based services and big data analysis. With the forthcoming services such as Internet of things and ultra-reliable, mission-critical connections, a next-generation radio access system to succeed LTE/LTE-A and known as "5G" or "NR" (New Radio) will be needed to satisfy all those demanding requirements. Studies regarding 5G/NR are proceeding within various groups within 3GPP, the 3rd Generation Partnership Project previously responsible for devising the UMTS and LTE standards.

Simultaneous requirements to be met comprise greatly increased traffic loads; many more devices; reduced latency; low-power and low-cost solutions for Machine-to-Machine (M2M) devices; and increased peak and guaranteed data rates. The intention of 5G is to satisfy all requirements of these applications and ideally, 5G could provide at least the following features:
- Ultra-reliable connection in addition to higher data rate, higher capacity and higher spectral efficiency
- Unified user experience together with significant reduction on latency
- Scalability/adaptability to applications with significant different Quality of Service (QoS) requirements
- Access all spectrum and bands and support different spectrum sharing schemes

From the properties of traffic profiles point of view, it is expected that 5G will support three profiles with significant different properties, namely:
(i) high data throughput with highly mobile devices;
(ii) low-energy consumption and long lived sensor-based services; and
(iii) extremely low latency and high reliability services.

From the industry point of view, 5G will not only provide traditional voice and data services but also expand and penetrate to other industries such as automotive, agriculture, city management, healthcare, energy, public transportation etc., and all these will lead to a large ecosystem which has never been experienced before.

The technical challenges for designing such a sophisticated and complicated system are tremendous and significant breakthroughs will be required both on the network side and in the radio interface. Regarding the physical layer of the radio interface, a few new techniques will be introduced in order to support aforementioned 5G requirements. One important objective of studies in 3GPP (see for example RP-160671, New SID Proposal: Study on New Radio Access Technology, NTT DOCOMO) is to investigate fundamental physical layer designs such as waveform design, basic numerology (see below) and frame structure, channel coding scheme(s) and so on to meet key 5G requirements.

As part of the physical layer design, the traditional concept of a base station which both schedules resources and houses the physical antennas for wireless communication with terminals, becomes more fluid. Terminology used with respect to 5G/NR includes "gNB" (Next generation Node B), which manages (either locally or remotely) at least one transmission point. Such a transmission point may also serve as a reception point, and is typically referred to as a TRP (Transmission/Reception Point).

At least in the longer term, it is expected that much more spectrum will be available to 5G systems in order to meet traffic demand. To date, spectrum for mobile communication has focused on frequencies below 6GHz and typically 2GHz or below. In the time frame of 2020 to 2030, more spectrum at higher frequencies such as around 6 GHz, 10 GHz or even up to 100 GHz will be considered. At the same time wider frequency spans will be available at these extreme higher frequency bands. More detailed information is provided in Table 1 (source: Ofcom, "Spectrum above 6 GHz for future mobile communications", February 2015).

**Table 1 Possible spectrum allocation for 5G and beyond**

| **Spectrum** | **Possible allocation** |
|---|---|
| **5GHz** | This band is being considered at the ITU World Radio Conference in 2015 (WRC-15) - in total over 300MHz in new spectrum could be allocated |
| | If agreed at WRC-15, a contiguous band from 5150 to 5925MHz would be created using a combination of existing and new spectrum |
| | Channel sizes likely based on current Wi-Fi use, in multiples of 20MHz, and the band may remain as a licence-exempt band in line with current Wi-Fi |
| **15GHz** | Potentially over 500MHz contiguous spectrum depending on the sub-band used and sharing with existing uses |
| | Very high speeds are achievable - for example, peak speeds of 5Gbps have been demonstrated already |
| | Channel sizes could be very wide, for example, multiples of 100MHz |
| **28GHz** | Similar to the 15GHz band, for example, over contiguous 500MHz of spectrum ' depending on the sub-band used and sharing with existing uses |
| | Channel sizes could be very wide, for example, multiples of 100MHz |
| | Depending on the bandwidth available, the band could accommodate multiple operators with the opportunity for companies other than established mobile operators to offer some 5G services with an assignment of 100MHz per operator, or more, depending on national availability and sharing with existing services. ........................................................... |
| **60-80GHz** | Potentially up to 5GHz of contiguous spectrum depending on the selected sub-band (for example, 71-76MHz and/or 81-86GHz) |
| | Channel sizes could be very wide, for example, multiples of 100MHz |
| | Depending on the bandwidth available, the band could accommodate multiple operators with the opportunity for companies other than established mobile operators to offer some 5G services with a 100MHz assignment per operator, or more, depending on national availability and sharing with existing services. |

The radio propagation characteristics at the extreme high frequencies such as spectrum above 6 GHz, brings more challenges compared with that of spectrum at 2 GHz, which is the typical spectrum of 3G/4G. These challenges are the large path loss, poor penetration/scattering properties and possible non-existing line of light path. Despite these challenges, extreme high frequencies also have their advantages such as large bandwidth availability. Carrier spacings may be adapted to suit the bandwidth(s) available.

The possibility of using various frequency bands or frequency layers leads to the concept of "numerology". This is a special term used for NR to describe a set of parameters for OFDM. For example numerology 1 has a 15 KHz carrier spacing, a particular OFDM symbol period and a particular cyclic prefix length. "numerology 2" may have a 30 kHz carrier spacing, a particular OFDM symbol length (which is half of that of the numerology with 15 kHz), and also a particular different cyclic prefix length.

Thus, a UE may need to communicate via different frequency layers, which differ in the sense that each layer has a different central frequency, or that they are not overlapping in the frequency domain. The frequency layers can be different bands, or different frequency parts within one band. Generally, different cells will be defined in each of the frequency layers. It is assumed that a UE has one RF circuit, or that in the case of multiple RF circuits, all are in use so the UE does not have a "free" RF circuit. Under these scenarios a "measurement gap" will be required when the UE needs to retune to a different frequency layer, as explained later.

An advantage of high frequencies is that the size of antennas can be small, which means that a dense antenna array is more feasible to be used for extreme high frequency scenarios. With a dense antenna array, it is easy for a mobile network to exploit the benefits of beam-forming techniques. Digital beamforming and analog beamforming are two typical types of beamforming. Theoretically, the difference between them is that, at a particular time instance, analog beamforming builds a single beam using many of antennas, to cover a limited area with smaller power consumption and hardware usage; whereas digital beamforming can have multiple beams simultaneously to cover a relatively wide area with more power consumption and more hardware cost. Sometimes the network can use these two beamforming techniques together.

In discussions in 3GPP on NR it was already agreed that both single beam operation and multiple beam operation should be supported by the initial access procedure. In the following, terminology and principles of operation relevant for LTE (4G) are also assumed to generally applicable for NR (5G). The NR design is assumed to be based on LTE, but with additional features and enhancements.

Thus a typical NR cell, provided by a gNB, may consist of one or a few TRPs (Transmission Reception Points) and each TRP may generate a few beams to provide coverage within a cell. Here we consider a cell to be a geographical area where a cell ID can be determined by a terminal from transmissions by the network. In a similar way to camping on a cell in 2G/3G/4G in NR, a UE may camp on a particular beam to access the network. One UE would connect with the TRP via one beam in general.

To deal with this new scenario in 3GPP discussions on NR, the concept of "SS block" is introduced into the NR synchronization design, where "SS" stands for synchronization signal. A SS block can consist of PSS, SSS and PBCH (or any combination thereof) and these signals can multiplexed by either TDM or FDM within a SS block. A given SS block is transmitted using a corresponding beam. Multiple SS blocks may compose one SS burst. The simplest scenario is where there is one beam per SS block and all the beams use the same frequency but differ in the spatial domain (transmitted toward different directions).

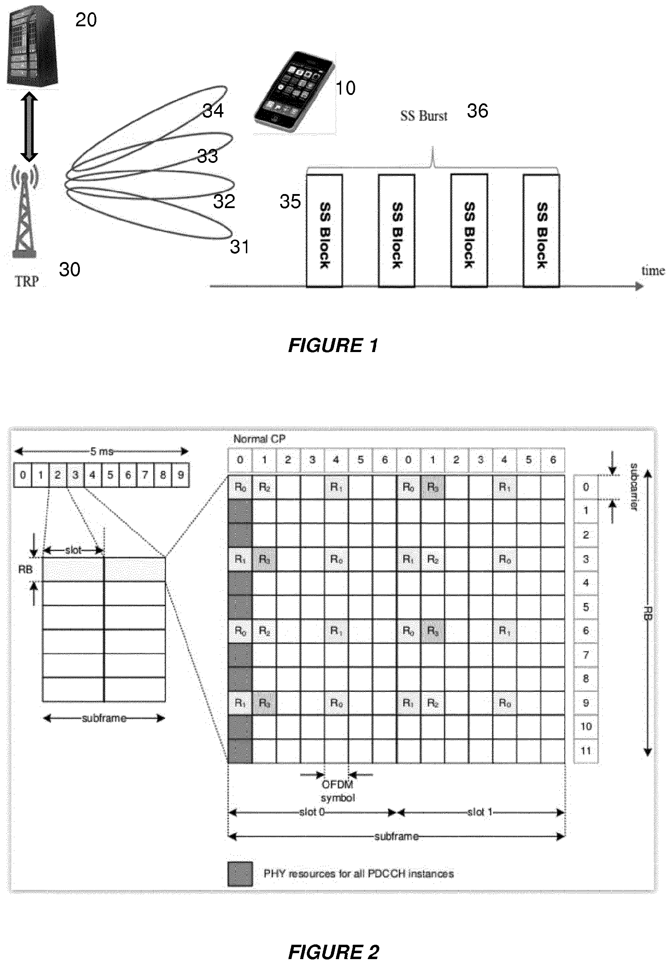

**Figure 1** illustrates a UE 10 arranged for wireless communication with a gNB 20 via a TRP 30. The TRP 30 transmits beams 31 - 34 as indicated by the ellipses. Within each beam, SS blocks 35 (also known as SSBs) are transmitted sequentially in time, each partly occupied by PSS/SSS and PBCH. A plurality of successive SS blocks 35 equal in number to the beams can be grouped together to form one SS burst 36. Multiple SS bursts 36 can compose one "SS burst set" which may be transmitted repeatedly. User data may be multiplexed with the synchronization signals; alternatively, the SS block may contain only PSS/SSS/PBCH, in other words system information.

One key functionality of a mobile communication system is to provide and maintain services to a mobile terminal. To achieve this functionality RRM (Radio Resource Measurement) is required and its main goal is to provide the UE with the capability of timely detection and identification of the best suitable network nodes available for potential connection. In addition, RRM allows the network to get the information regarding the radio conditions that a particular UE is experiencing. In LTE, measurement activities is controlled by UE both under the RRC_IDLE state and within RRC_CONNECTED state, measurement is configured by the eNB and a terminal will follow the eNB's instructions to perform measurement.

In order to support mobility functionality within the LTE system, a terminal will perform RSRP (Reference Signal Received Power) and RSRQ (Reference Signal Received Quality) measurements, both based on the cell-specific reference signal (CRS). The allocation of CRS in LTE is shown in **Figure 2****,** in which the light-shaded squares marked R indicate locations of reference signals, and darker-shaded squares indicate resources occupied by the Physical Downlink Control Channel PDCCH. Except for shifts at the frequency domain, the CRS pattern of a particular antenna port is identical over the full system bandwidth and repeats itself over the time domain.

When a UE is in RRC_CONNECTED state, exactly when and how to execute measurement is controlled by eNB through measurement configuration. The measurement configuration is sent to the UE by means of dedicated signalling, typically using the "RRCConnectionReconfiguration" message. The measurement configuration message includes the following key components:
**Measurement objects:** The objects on which the UE shall perform the measurements (CRS for example).
**Reporting configurations:** A list of reporting configurations where each reporting configuration consists of the following:
   - Reporting criterion: The criterion that triggers the UE to send a measurement report. This can either be periodical or a single event description.
   - Reporting format: The quantities that the UE includes in the measurement report and associated information (e.g. number of cells to report).
**Measurement gap configuration:** Periods that the UE may use to perform measurements, in which no transmissions are scheduled on the uplink or downlink.
**Measurement identities:** A list of measurement identities where each measurement identity links one measurement object with one reporting configuration. By configuring multiple measurement identities it is possible to link more than one measurement object to the same reporting configuration, as well as to link more than one reporting configuration to the same measurement object. The measurement identity is used as a reference number in the measurement report.

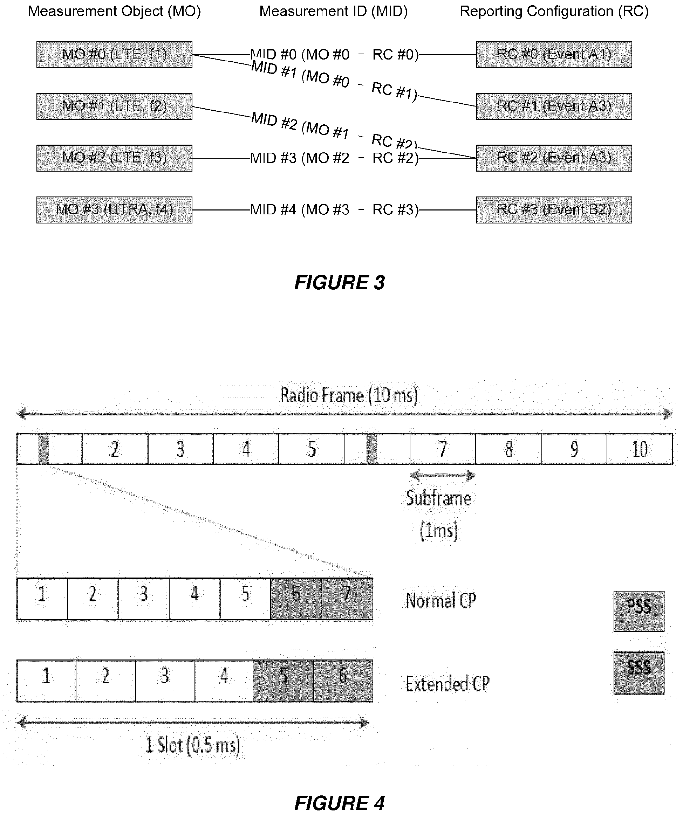

Each measurement identity (MID) is configured to link one measurement object (MO) with one measurement reporting configuration (RC) and is used as a reference number in the measurement report. So by configuring multiple MIDs in LTE, it is possible to link more than one MO to the same RC, as well as to link more than one RC to the same MO, which is illustrated in **Figure 3****.**

A further parameter of relevance to measurement configuration is the measurement duration, in other words the period of time for which to apply the measurement configuration. In LTE, the measurement duration may be implicitly indicated to the UE as the time between successive "RRCConnectionReconfiguration" messages.

In LTE, when a UE performs inter-frequency or inter-RAT measurement (where RAT stands for Radio Access Technology), usually a measurement gap will be configured for that UE. Here, "inter-frequency" refers both to (i) different cells having different carrier frequencies within the same frequency band, and (ii) to different frequency bands usually but not necessarily using the same RAT. With the introduction of carrier aggregation, this concept can extend to different component carriers having different central frequencies within the same frequency band.

The reason for configuring a measurement gap is that a UE will retune its RF chains from the current frequency layer to a different frequency layer to carry out the measurement. Within a measurement gap a UE will not receive any data during downlink (an interruption) and the uplink transmission will also be impacted since the uplink scheduling information cannot be received at the downlink side which means the system capacity and spectrum efficiency is reduced. As already mentioned, within the measurement gap the UE detects reference signals (e.g., CRS). However, it is not enough to detect CRS alone: the UE also has to detect synchronization signals of the frequency layer (cell) concerned and acquire the cell identity.

Therefore, for LTE inter-frequency measurement, a UE will firstly try to detect the synchronization signals (PSS primary synchronization signal and SSS secondary synchronization signal) in order to obtain the location of the reference signals. The synchronization signal of LTE has a periodicity of 5 ms as shown in **Figure 4**. The measurement gap length is defined to be 6 ms to ensure that one PSS/SSS can always be captured by one particular measurement gap regardless of the offset of the gap, in other words its starting position at the time domain. Although the CRS also need to coincide with the measurement gap as already mentioned, the density of CRS is higher compared with the synchronization signals, so the measurement gap length is less critical with respect to CRS, and the need to detect PSS/SSS is the limiting factor.

Due to new deployment scenarios, a new design philosophy and new 5G technologies especially considering beamforming, the design of NR synchronization signal and reference signals is significantly different as compared with LTE synchronization and reference signal design. To guarantee meaningful and efficient NR RRM measurement, new solutions for the measurement gap configuration have to be provided for NR system.

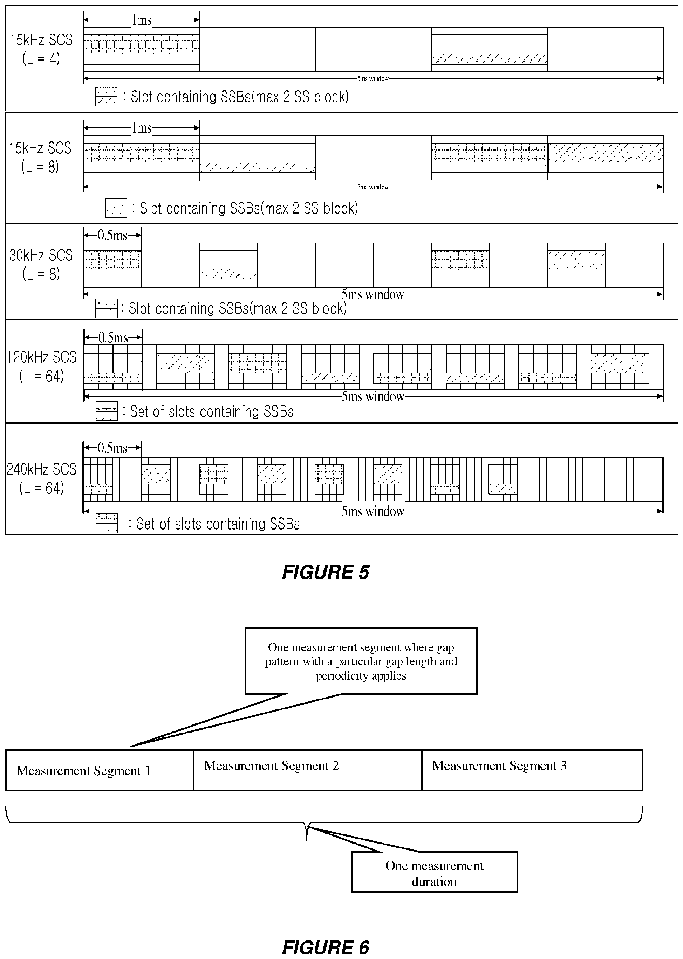

In NR, it is agreed that the transmission of SS blocks within a SS burst set is confined to a 5 ms window regardless of SS burst set periodicity. The value of SS set periodicity is selected from the set of values {5, 10, 20, 40, 80, 160} ms. It is further agreed how to map SS blocks within a 5ms timing window for different subcarrier spacing values, as illustrated in **Figure 5****.**

In the upper part of Figure 5, SSB stands for SS block, and L represents the total number of SS blocks within a SS burst set. Also, the solid vertical lines indicate slots, to illustrate how many SS blocks can be located within a 5 ms window. In 5G/NR, the total number of OFDM symbols occupied by a SS block is fixed at four, and a slot will have 14 OFDM symbols. Consequently, for different subcarrier spacings, for example comparing 15 kHz and 240 kHz, within a 5 ms time duration, the number of slots of 240 kHz is 16 times compared with that of 15 kHz, since the duration of each OFDM symbol at 240 kHz is 1/16 of that of 15 kHz.

The lower part of Figure 5 (solid black lines) shows one SS burst set. Burst set periodicity (within which one SS burst set occurs from a given cell) can be 5, 10, 20, 40, 80 or even possibly 160ms. The periodicity, although not directly linked with SCS, tends to vary with SCS due to mobility performance requirements. Usually a high frequency band will use a larger SCS which means the size of cell is smaller, and corresponding to this the OFDM symbol duration will be shorter. To guarantee mobility performance, synchronization signals will be transmitted more frequently, hence a small burst set periodicity can be used under this scenario.

All SS blocks within a SS burst set are located within the same 5 ms window, for example, a 5 ms window within a 80 ms SS burst set period. Neighbouring cells may be arranged to transmit their SS burst sets within different time windows. Within an individual 5 ms window, the number of SS blocks can range from 4 to 64, depending on SCS. As already mentioned each SS block has 4 OFDM symbols: one is used for PSS, one for SSS and two for PBCH. It is sufficient for the terminal to detect one SS block, though there may be some advantage to detecting more than one, for example to further detect CRS or to measure PSS/SSS power.

It will be noted that none of the configurations shown in Figure 5 (which are provided purely for purposes of illustration) match the LTE configuration of a 15kHz subcarrier spacing with a 0.5ms slot duration. Incidentally, Figure 5 merely shows mapping within a 5ms window without reference to subframes (which are fixed at 1ms duration for NR).

As mentioned before, the 6 ms measurement gap design in LTE is conservative to ensure PSS/SSS is captured by one measurement gap. In fact since LTE PSS and SSS only occupy 1 OFDM symbol, a much shorter measurement gap could be used, for example a 1 ms measurement gap or even less. However, under this scenario a measurement gap will not always capture PSS/SSS signal and a more sophisticated design on measurement gap length and periodicity is required to ensure one PSS/SSS signal is captured by using one or a number of measurement gaps.

The SS set periodicity defined in NR brings a huge challenge on measurement gap length design. If using LTE design methodology, assuming SS set periodicity is 40 ms, then a 40 ms length measurement gap is required to ensure one or a few SS blocks are definitely captured by one measurement gap, no matter what its offset (starting position in the time domain). However, a 40 ms measurement gap length is extremely long and not a practical value for optimum system performance. In practice even a 10 ms interruption at downlink reception is long for the mobile communication network. Therefore a new design for measurement gap length is needed for NR.

In LTE there are only two different measurement gap periodicities and one of them will be selected, on a per-UE basis, for one measurement configuration via the RRCConnectionReconfiguration message referred to above. The text in the shaded box below reflects the way in which a signalling message is represented in the 3GPP standards. In each case, the left-hand column represents parameters in the form of lEs (Information Elements) and the right-hand column indicates possible values of the parameter. In accordance with the style of protocols in TS36.331 (a 3GPP RAN2 specification), INTEGER will return an integer value such as 1, 2, 3. More particularly, specifying the value gp0 or gp1 as follows informs the UE of both the offset and periodicity:- 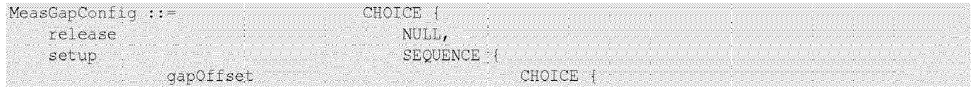 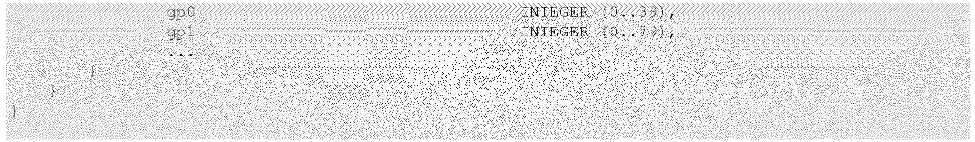 where "gapOffset" means the starting position of the measurement gap and the unit is 1ms. gp0 ranges from 0 to 39 and gp1 from 0 to 79.

This means that in LTE, all the measurement objects shown in Figure 2 for a given UE will use the same measurement gap periodicity configuration. In NR, however, for each measurement object, it is very possible that a different gap periodicity value may be required. For example if the measurement objects are for different frequency layers, different measurement gap periodicity maybe required since each frequency layer may have different SS block set periodicity or different density of CSI-RS for L3 mobility measurement. Therefore the current measurement gap configuration structure is in need of improvement for NR.

### Summary of the Invention

According to a first aspect of the present invention, there is provided a method of measurement configuration in a wireless communication system, the method comprising communicating to a terminal a measurement gap configuration which has multiple measurement gap lengths and repetition periods.

Here, "measurement configuration" refers to information which instructs the terminal how and when to perform measurements on received signals. A "measurement gap configuration" defines a gap in the terminal's normal transmission and/or reception with respect to a serving cell or beam, for the purpose of allowing the terminal to make measurements on signals from other cells or beams. A measurement gap length refers to the duration of a measurement gap and a repetition period defines a length of time between successive measurement gaps.

In an embodiment, the measurement gap length is set within a range of possible values. In another embodiment the measurement gap length is configured (selected by the network) from a list of possible values.

In the measurement gap configuration having a plurality of measurement gap lengths, preferably a measurement periodicity is specified for each of the different measurement gap lengths.

In an embodiment the plurality of measurement gap lengths correspond to different measurement objects.

The measurement gap configuration may include multiple measurement gap patterns for the terminal, each said pattern having a respective measurement gap length.

The method may further comprise communicating, as part of the measurement gap configuration, a measurement duration to the terminal within which the measurement gap lengths are to be used. In other words the measurement duration is a time period of validity of the measurement gap configuration.

In this case, the measurement duration may comprise a sequence of measurement segments (successive time periods) to each of which a respective said measurement gap length applies.

In any method as referred to above, the method may further comprise forming a new measurement gap length information element within measurement gap configuration information communicated to the terminal. In this way the novel features of embodiments can be accommodated within an existing signalling structure.

In any method as referred to above, the method may further comprise broadcasting synchronization signal, SS, sets with a periodicity y and setting a measurement periodicity x for the terminal such that the result of a mod operation between the measurement periodicity x and the SS set periodicity y is not zero, i.e., mod(x, y) * 0 or mod(y, x) * 0.

The above relationship between measurement periodicity x and SS set periodicity y may be employed independently of the features mentioned previously. Accordingly, a second aspect of the present invention provides a method of measurement gap configuration in a wireless communication system in which SS sets are broadcast with a periodicity y, wherein:
the result of a mod operation between a gap repetition period x contained in the measurement gap configuration and the SS set periodicity y is not zero, i.e., mod(x, y) * 0 or mod(y, x) ≠ 0.

In any method as defined above, the result may be to configure the terminal with a measurement gap of length less than a particular regularly-occurring time window which contains a synchronization signal or the repetition period of the synchronization signals of a particular beam. As one concrete example, the terminal may employ a measurement gap length of less than 6ms.

According to a third aspect of the present invention, there is provided a base station for use in a wireless communication system, the base station comprising:
a transmitter/receiver for communicating with a terminal; and
a control unit for causing the transmitter/receiver to communicate to the terminal a measurement gap configuration which has multiple measurement lengths and repetition periods.

According to a fourth aspect of the present invention, there is provided a terminal for use in a wireless communication system, the terminal comprising:
a transmitter/receiver which can be controlled to make measurements on signals; and
a control unit for controlling the transmitter/receiver using a measurement gap configuration which has multiple measurement lengths and repetition periods.

A fifth aspect provides a wireless communication system comprising the above base station and terminal.

The above base station, terminal and wireless communication system may include any of the features of the method outlined above.

Further aspects of the present invention provide computer-readable code which configures a base station or a terminal in a wireless communication system to perform any method as defined above, as well as non-transitory computer-readable recording media carrying such code.

Thus, embodiments of the present invention address the design of a measurement gap employed in a 5G/NR wireless communication system. Configuration signalling may provide measurement gap configuration, with the same or different measurement gap length. In addition, solutions which may dynamically update the measurement gap repetition period or measurement gap length during one measurement duration are provided. These solutions will improve the accuracy of NR inter-frequency measurements and improve spectrum efficiency at the same time.

Features in embodiments include the following:
- A method which is designed for the measurement gap configuration in a communication system with multi-beam/single-beam operation, comprising enabling the system to define multiple measurement gap lengths for a particular UE
- Forming a new measurement gap length selection list which include multiple measurement gap length options within the measurement gap configuration information
- Forming a new measurement gap length information element within the measurement gap configuration information
- A method which is designed for the measurement configuration in a communication system with multi-beam/single-beam operation, comprising enabling various measurement gap length and repetition period may be configured within one measurement duration for a terminal
- A method which is designed for the measurement gap repetition in a communication system with multi-beam/single-beam operation, comprising making the mod operation between gap repetition period x and SS set periodicity y is not zero, i.e., mod(x, y) ≠ 0 or mod(y, x) ≠ 0.
- A method which is designed for the measurement gap length for NR which enables a measurement gap of length less than a particular regularly occurring time window which contains a synchronization signal or the repetition period of the synchronization signals of a particular beam
- Compatibility with the existing signalling structure MeasConfig.

In general, and unless there is a clear intention to the contrary, features described with respect to one aspect of the invention may be applied equally and in any combination to any other aspect, even if such a combination is not explicitly mentioned or described herein.

The "terminal" referred to above will typically take the form of a user equipment (UE), subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation is to be implied from this. The terminal may also function as a mobile relay station for example.

The "base station" referred to above includes, but is not limited to, the above mentioned gNB which manages (either locally or remotely) at least one transmission point.

### Brief Description of the Drawings

Reference is made, by way of example only, to the accompanying drawings in which:
Figure 1 illustrates a wireless communication system including a UE, gNB and TRP and showing SS bursts within a transmission beam;
Figure 2 illustrates a pattern of cell-specific reference signals, CRS, employed in a known LTE wireless communication system;
Figure 3 illustrates the relationship between a measurement object, measurement identity and reporting configuration;
Figure 4 illustrates the periodicity of synchronization signals;
Figure 5 shows proposed mappings of SS blocks within a 5ms timing window as proposed for 5G/NR;
Figure 6 illustrates various gap patterns applied within one measurement duration;
Figure 7 illustrates a measurement gap design principle applicable to an embodiment of the present invention;
Figure 8 is a schematic block diagram of a terminal to which the present invention may be applied; and
Figure 9 is a schematic block diagram of a base station to which the present invention may be applied.

### Detailed Description

The invention will be described with reference to embodiments based on a 5G/NR which is assumed to share many characteristics with LTE. It is assumed that the 5G/NR system includes a serving cell in wireless communication with a UE, the serving cell provided by or at least controlled by a base station (gNB).

The texts in shaded boxes below are signalling examples, reflecting the way in which signalling messages are represented in the 3GPP standards. In contrast to the above mentioned INTEGER, which will return an integer value such as 1, 2, 3, ENUMERATED will return a value from its list.

These values may be something like a1, a2, a3 or which cannot be provided by INTEGER. INTEGER is continuous: for example (1 ..10) indicates that the parameter may have any value between 1 to 10, whereas ENUMERATED is not continuous: for example [1,5,10] means that the parameter may only return one value among these three values. Text in bold indicates new additions in embodiments of the present invention, the remaining text being items already present in the conventional signalling structure or agreed for use in 5G/NR.

A first embodiment is to create a new measurement gap configuration structure which allows a system to configure multiple measurement gap lengths or a configurable measurement gap length for a terminal. The distinction here is that "configure multiple measurement gap lengths" means to select one of a plurality of pre-arranged fixed values for the measurement gap, whilst "configurable measurement gap length" refers to the ability freely to set the measurement gap. Thus, in contrast to measurement gap lengths in LTE, a base station may configure a terminal with any one or more of a plurality of (more than two) measurement gap lengths.

The second embodiment, which develops the idea of the first embodiment, is to form a new measurement gap length selection list which include multiple measurement gap length options, or in other words a plurality of pre-arranged fixed values as just mentioned. The gaps may be signalled explicitly (e.g. value0 = 6ms) or, preferably, as indexes to a list (e.g. value0 = "1" where "1" represents a value in a list). For a particular UE, the system may select one value from the list and communicate this value through the measurement gap configuration information. In practice, one solution is to add a new IE "measGapLength" into the measurement gap configuration structure based on the current measurement LTE structure, as shown in the following example: 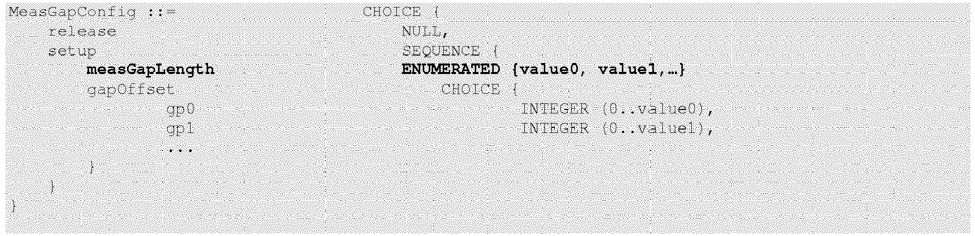 It will be note that conventionally, there is no need for an IE like "MeasGapLength" because as mentioned before, through the tags gp0 or gp1, a UE knows both offset and periodicity at the same time without any ambiguity, since one UE only has one pattern.

The third embodiment, also based on the first embodiment, is a generalization of the second embodiment where the system has multiple measurement gap length options and multiple measurement periodicities. The system configures multiple gap length configurations and multiple measurement periodicities within the measurement gap configuration for a particular UE. In practice, one solution is shown in the following example: 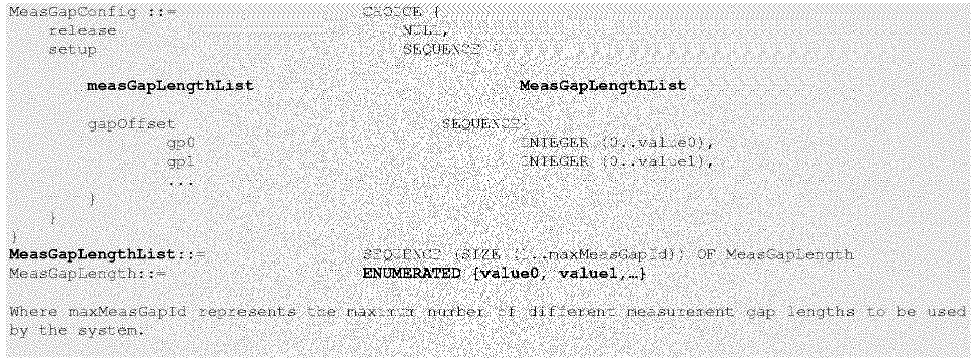 In other words, assuming there are multiple gap length values g1, g2, g3, the second embodiment selects one from the list and send this one to a UE whereas the third embodiment selects a few candidates from the list and send all these candidates to a UE.

As already mentioned, a measurement duration may be said to exist in LTE and UMTS; however, it is not clearly defined. A gap will not be configured forever for a UE: when a gap is needed it is configured through "RRCConnectionReconfiguration", and when it is not needed, in LTE the gap configuration is simply released through "RRCConnectionReconfiguration". This period (from configuration until release) may be viewed as a measurement duration. By contrast, in a fourth embodiment the measurement duration is defined explicitly (as the summation of all measurement segmentations) and may be shorter compared to the duration from configuration to release.

The fourth embodiment is an independent embodiment, to enable various measurement gap length and repetition periods to be configured within one measurement duration. The intention is to provide more flexibility for measurement gap configuration to efficiently utilize the NR reference signals design where the density of reference signals may be different at different frequency/time regions, as illustrated in **Figure 6**. Figure 6 shows the measurement duration as the summation of a series of measurement segments, in each of which a gap pattern with a particular gap length and periodicity applies.

With the flexibility provided by the preceding embodiments, system spectrum efficiency may be improved. To realize this intention, a new measurement gap configuration structure should be provided and one concrete example, based on LTE measurement configuration structure, is provided in the following example: 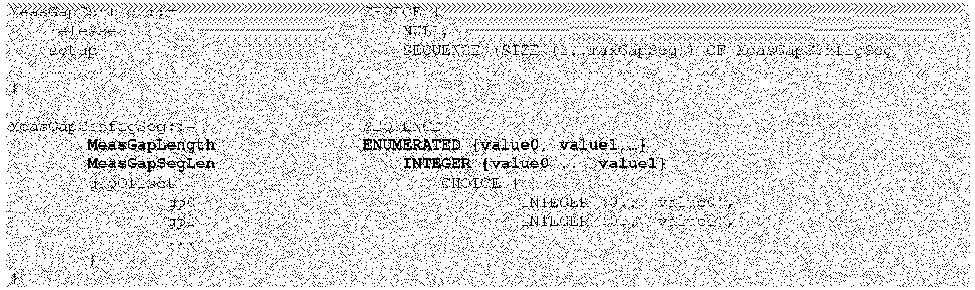 The IE MeasGapSegLen in the above protocol structure defines a particular duration where a measurement gap, whose length is defined by IE MeasGapLength and repetition period and offset are provided by IE gapOffset, applies.

The fifth embodiment, an independent embodiment, provides a concrete measurement gap design principle used for NR. Since the LTE gap design criterion is unsuitable for NR as explained in the introduction, one gap design solution is to ensure that the result of the mathematical modulus operation between gap repetition period and SS set periodicity is not zero, so that a measurement gap always collides with a SS blocks timing window once within a particular duration.

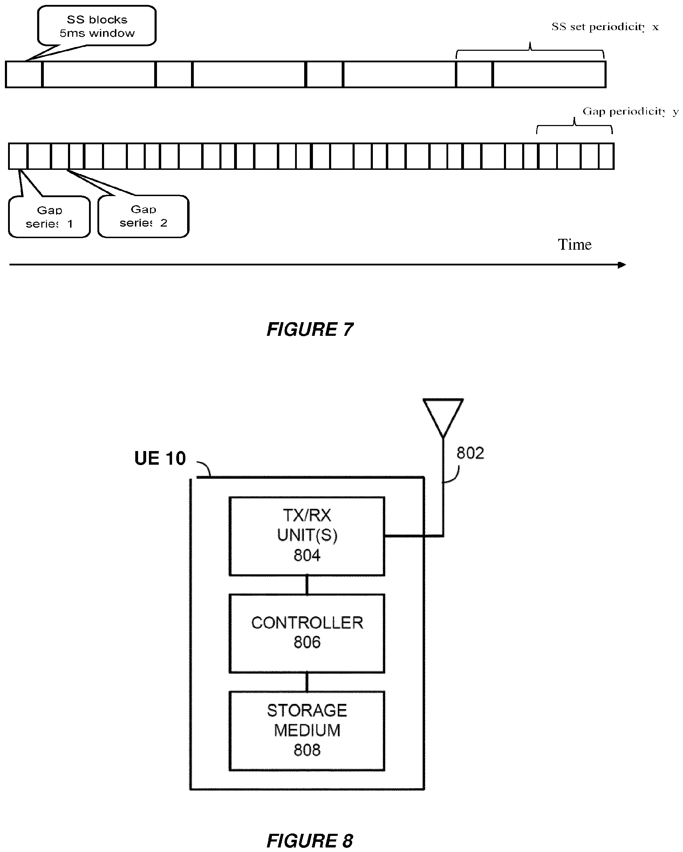

**Figure 7** shows two possible gap patterns to illustrate alternative cases, with only one gap pattern existing in practice for a given UE. (In practice, for one measurement target and within one measurement duration, there is no reason to configure more than one gap pattern). As Figure 7 shows, gap pattern 2 will never capture the measurement target, but gap pattern 1 will capture it, which implies that a much shorter gap may be used. Expressed mathematically, if the gap periodicity y is half of the SS set periodicity x, then mod(x, y) = 0. Without loss of generality assuming the offset of the SS blocks window within a SS set periodicity is 0 (i.e., the timing window is located at the beginning of a SS set repetition period), we find that gap pattern 1 always collides with a particular SS block window and gap pattern 2 cannot collide with any SS block window where these two gap series (gap patterns) have different offset value within a gap periodicity duration. On the other hand, if mod(x, y) ≠ 0, a measurement gap will definitely collide with a SS block window within a particular time duration for any arbitrary offset.

A sixth embodiment configures the offset of the gap, gap periodicity and gap length if necessary, based on information provided by the system (serving cell) which explicitly indicates the offset of SS block window. In other words, if the UE knows the SS offset, it may ensure that the measurement gap hits the window without needing to rely on the modulus operation in the sixth embodiment. The signalling structure provided by the first to fourth embodiments may be used by the system for corresponding configuration. Although this may be a simpler solution than the fifth embodiment, it also depends how much the serving cell knows about the configuration of other cells, especially other frequency layers where a measurement gap is required to perform measurement. In LTE a serving cell has limited information about cells in other frequency layers.

An seventh embodiment, which is an independent embodiment, is to provide a solution for measurement gap length design for NR. As mentioned in the introduction, since all SS blocks within one SS burst set are concentrated within a 5 ms timing window, it is reasonable to assume that the maximum measurement gap length is 5 ms, excluding the RF retune overhead which typically requires 0.5ms for one RF retune. Using a gap whose length is larger than 5 ms will not provide any gain in measurement performance (measurement accuracy etc.) and will reduce spectrum efficiency. However using a smaller gap length less than 5 ms is reasonable for NR since for NR even a 5 ms measurement gap cannot guarantee that one or a few SS blocks may be definitely captured within a SS set periodicity. If a UE fails to read the SS blocks within an initial 5 ms window, it may wait for the next 5ms window or search for SS blocks in a different frequency location.

With a smaller measurement gap length, system spectrum efficiency may be further improved, especially for high frequency spectrum where a few SS blocks may be measured within a duration much shorter than 5 ms timing window and further increases measurement duration may not capture more measurement samples due to multi-beam operation. In addition the overhead of RF retune (for example 1 ms) should be considered and the cost of overhead is high when the gap length is too small, for example the scenario where more gaps are used to collect same amount of measurement samples. Compared with 6 ms (5 ms gap) used in LTE, a 5 ms (4 ms gap) and 4 ms (3 ms gap) measurement gap length will reduce the interruption period by 20% and 40%, respectively. To explain the dual timing values just mentioned, 5ms is the pure value used in LTE, but actually the value is 6 ms considering 1ms overhead (RF retuning time each way is 0.5ms). 4ms is used here as an example to show how much possible gain may be achieved by optimizing measurement gap design. The minimum reasonable gap length for NR could be 1ms.

**Figure 8** is a block diagram illustrating an example of a terminal (UE) 10 to which the present invention may be applied. The terminal 10 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The terminal 10 includes transmitter/receiver unit(s) 804 connected to at least one antenna 802 (together defining a communication unit) and a controller 806 having access to memory in the form of a storage medium 808. The controller 806 may be, for example, a microprocessor, digital signal processor (DSP), application-specific integrated circuit (ASIC), field-programmable gate array (FPGA), or other logic circuitry programmed or otherwise configured to perform the various functions described above, including obtaining the measurement configuration from the received signals and operating the transmitter/receiver unit 804 accordingly. For example, the various functions described above may be embodied in the form of a computer program stored in the storage medium 808 and executed by the controller 806. The transmission/reception unit 804 is arranged, under control of the controller 806, to receive SS blocks, detect reference signals, and so on as discussed previously. The storage medium 808 stores the received measurement configuration, results of measurements on reference signals and so on.

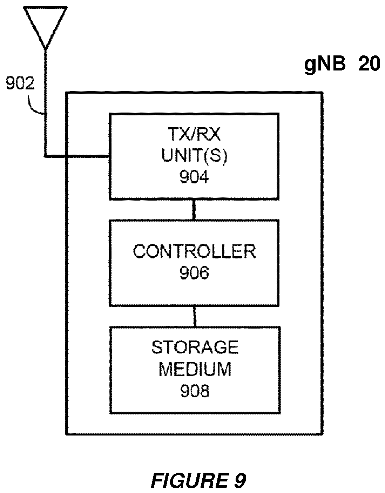

**Figure 9** is a block diagram illustrating an example of a base station (gNB) 20 responsible for one or more cells. The base station includes transmitter/receiver unit(s) 904 connected to at least one antenna 902 (which forms a TRP either built into, or external to, the gNB) and a controller 906. The controller may be, for example, a microprocessor, DSP, ASIC, FPGA, or other logic circuitry programmed or otherwise configured to perform the various functions described above including causing the transmitter/receiver unit 904 to communicate to the terminal a measurement gap configuration which has multiple measurement lengths and repetition periods. For example, the various functions described above may be embodied in the form of a computer program stored in the storage medium 908 and executed by the controller 906. The transmission/reception unit 904 is responsible for broadcasting synchronization signals, reference signals, RRC messages and so forth, under control of the controller 906.

Thus, to summarise, embodiments of the present invention provide a method and apparatus for measurement gap design in a 5G wireless communication system. In LTE a terminal will use a measurement gap to make inter-frequency and inter-RAT measurements to maintain UE mobility. In NR the synchronization signals and reference signal designs are significantly different compared to schemes used by LTE. In order to adapt new synchronization and reference signal schemes of NR, measurement gap configuration schemes need to be re-designed. Multiple solutions for the measurement gap configurations are proposed in this invention.

Various modifications are possible within the scope of the present invention.

Whilst primarily intended for multi-beam systems, embodiments of the present invention may also be employed even with only a single beam.

As already mentioned, embodiments of the present invention involve synchronization signals broadcast or transmitted by a cell in order to enable terminals to become synchronized. A known example of such signals from LTE is the above mentioned PSS/SSS. However, the present invention is not necessarily limited to PSS/SSS as these terms are understood in the context of LTE. Other types of signal employed in a LTE and 5G systems, which a UE may need to detect within a measurement gap, might also be applicable to the present invention.

The invention is equally applicable to FDD and TDD systems, and to mixed TDD/FDD implementations (i.e., not restricted to cells of the same FDD/TDD type).

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be clearly understood that various changes and/or modifications may be made to the particular embodiment just described without departing from the scope of the claims.

### Industrial Applicability

In LTE there are only two measurement gap configurations and these two configurations also have the same measurement gap length. A terminal will only have one measurement gap configuration which is linked to all measurement objects. In this invention a measurement gap configuration signalling provide multiple measurement gap configuration, with the same or different measurement gap length and repetition period. Moreover, one solution which provides one or multiple gap configurations within a particular measurement duration is provided. Another solution which may dynamically update the measurement gap repetition period or measurement gap length during one measurement duration is also provided. The measurement gap repetition period may be set in view of a SS burst set repetition period. These solutions will improve the accuracy of NR inter-frequency measurements and improve spectrum efficiency at the same time.

## Claims

1. A method of measurement configuration in a wireless communication system, comprising communicating to a terminal a measurement gap configuration which has multiple measurement gap lengths and repetition periods.

2. The method according to claim 1 wherein each measurement gap length is set within a range of possible values.

3. The method according to claim 1 wherein each measurement gap length is configured from a list of possible values.

4. The method according to claim 1, 2 or 3 wherein the measurement gap configuration comprises a plurality of measurement gap lengths and a measurement periodicity for each of the different measurement gap lengths.

5. The method according to any preceding claim wherein the plurality of measurement gap lengths correspond to different measurement objects.

6. The method according to any preceding claim further comprising specifying multiple measurement gap patterns for the terminal, each said pattern having a respective measurement gap length.

7. The method according to any preceding claim further comprising communicating a measurement duration to the terminal within which the measurement gap lengths are to be used.

8. The method according to claim 7 wherein the measurement duration comprises a sequence of measurement segments to each of which a respective said measurement gap length applies.

9. The method according to any preceding claim further comprising forming a new measurement gap length information element within measurement gap configuration information communicated to the terminal.

10. The method according to any preceding claim further comprising broadcasting synchronization signal, SS, sets with a periodicity y and setting a measurement periodicity x for the terminal such that the result of a mod operation between measurement periodicity x and SS set periodicity y is not zero, i.e., mod(x, y) ≠ 0 or mod(y, x) ≠ 0.

11. A method of measurement gap configuration in a wireless communication system in which synchronization signal, SS, sets are broadcast with a periodicity y, wherein:
the result of a mod operation between a gap repetition period x contained in the measurement gap configuration and the SS set periodicity y is not zero, i.e., mod(x, y) ≠ 0 or mod(y, x) ≠ 0.

12. The method according to any preceding claim in which a terminal is configured with a measurement gap of length less than a particular regularly-occurring time window which contains a synchronization signal or the repetition period of the synchronization signals of a particular beam.

13. A base station for use in a wireless communication system, the base station comprising:
a transmitter/receiver for communicating with a terminal; and
a control unit for causing the transmitter/receiver to communicate to the terminal a measurement gap configuration which has multiple measurement lengths and repetition periods.

14. A terminal for use in a wireless communication system, the terminal comprising:
a transmitter/receiver which can be controlled to make measurements on signals; and
a control unit for controlling the transmitter/receiver using a measurement gap configuration which has multiple measurement lengths and repetition periods.

15. A wireless communication system comprising the base station according to claim 13 and the terminal according to claim 14.
